# EUROPEAN PATENT APPLICATION

(11) **EP 4 847 270 A1**
(43) Date of publication of application: **02.12.2026**
(21) Application number: 25744858.9
(22) Date of filing: 20.01.2025
(51) Int. Cl.: B41M 5/00, B41J 2/01, C09D 11/54

(54) **INKJET RECORDING TREATMENT LIQUID**

(30) Priority: 25.01.2024 JP 2024009360
(71) Applicant: Kao Corporation, Tokyo 103-8210 (JP)
(72) Inventor: EGUCHI, Tetsuya, Tokyo 103-8210 (JP); TAMURA, Yuichi, Tokyo 103-8210 (JP); INOUE, Masashi, Tokyo 103-8210 (JP)
(74) Representative: Hoffmann Eitle
(86) International application number: PCT/JP2025/001577
(87) International publication number: WO 2025/159044

(57) **Abstract**

Provided are a treatment solution for inkjet printing, an ink set for inkjet printing, a surface-treated printing medium, an inkjet printing method, and use of the treatment solution as a pretreatment solution for inkjet printing. The treatment solution contains a polyoxyethylene ether compound (A) having an aromatic ring, a flocculant (B'), and water, wherein a content of the compound (A) is 3% by mass or more. The treatment solution for inkjet printing can produce high-quality printed materials having both good dot spreading properties and excellent image uniformity, even if the treatment solution is heat-dried after being applied to a low-permeable printing medium.

## Description

### Technical Field

The present invention relates to a treatment solution for inkjet printing, an ink set for inkjet printing, a surface-treated printing medium, an inkjet printing method, and use of the treatment solution as a pretreatment solution for inkjet printing.

### Background Art

Inkjet printing has many advantages of, e.g., eliminating the need for plate making, facilitating variable data printing, and enabling non-contact printing. Therefore, the inkjet printing has become widespread in various fields such as office work and home use. In recent years, efforts have been made to adapt the inkjet printing for commercial and industrial printing applications, where print volumes are significantly higher. Thus, the inkjet printing is required to be compatible with a wide variety of printing media.

To meet this requirement, a method has been proposed that uses a treatment solution for intentionally aggregating solid components (e.g., colorants or resins) contained in ink and applies the treatment solution to a printing medium to form an ink aggregation layer before the ink is deposited on the printing medium.

For example, Patent Document 1 discloses treating an inkjet printing medium with a treatment solution that contains 1,4-cyclohexanedimethanol, a polyvalent metal salt, and water, thereby providing high-quality printed materials having both good dot spreading properties and excellent image uniformity when a low-permeable printing medium is used.

### Prior Art Documents

### Patent Documents

Patent Document 1: WO 2023/199982 A1

### Disclosure of the Invention

### Problem to be Solved by the Invention

When an image is printed by inkjet printing with ink on a printing medium that has been surface-treated with a treatment solution, due to a recent increase in printing speed, the treatment solution may hinder drying of the ink, and the ink may be transferred from the image forming portion to transport rollers of a printer, causing ink stains on the transport rollers. To prevent such ink stains, the treatment solution can be dried by heating after being applied to the printing medium. This process also addresses the need for easy handling or storage of the surface-treated printing medium, in the case where the treatment solution is applied to a printing medium and printing is later performed on the printing medium using a printer as a separate step. However, it was revealed that the technology of Patent Document 1 could not achieve sufficient performance when the treatment solution applied to the low-permeable printing medium was dried by heating, and still left room for improvement.

The present invention provides a treatment solution for inkjet printing, an ink set for inkjet printing, a surface-treated printing medium, and an inkjet printing method, all designed to produce high-quality printed materials having both good dot spreading properties and excellent image uniformity, even if the treatment solution is heat-dried after being applied to a low-permeable printing medium.

### Means for Solving Problem

The present inventors found that the above problem would be solved by using a treatment solution for inkjet printing that contains a polyoxyethylene ether compound having an aromatic ring, one or more compounds selected from the group consisting of a polyvalent metal salt, a polyamine, and an organic acid, and water, in which the content of the polyoxyethylene ether compound is equal to or higher than a predetermined value.

In other words, the present invention provides the following [1] to [5].
[1] A treatment solution for inkjet printing, containing a polyoxyethylene ether compound (A) having an aromatic ring, a flocculant (B'), and water, wherein a content of the compound (A) is 3% by mass or more.
[2] An ink set for inkjet printing, including the treatment solution according to [1] and ink containing a colorant and water.
[3] A surface-treated printing medium, having been treated with the treatment solution according to [1].
[4] An inkjet printing method using the treatment solution according to [1], including:
   a process 1 of applying the treatment solution to a printing medium and then heat-drying the treatment solution on the printing medium to prepare a surface-treated printing medium; and
   a process 2 of forming an image on the treated surface of the surface-treated printing medium prepared in the process 1 by inkjet printing with ink containing a colorant and water.
[5] Use of a composition as a pretreatment solution for inkjet printing, the composition containing: a polyoxyethylene ether compound (A) having an aromatic ring; one or more compounds (B) selected from the group consisting of a polyvalent metal salt, a polyamine, and an organic acid; and water, wherein a content of the compound (A) is 3% by mass or more.

### Effects of the Invention

The present invention is capable of providing a treatment solution for inkjet printing, an ink set for inkjet printing, a surface-treated printing medium, and an inkjet printing method, all designed to produce high-quality printed materials having both good dot spreading properties and excellent image uniformity, even if the treatment solution is heat-dried after being applied to a low-permeable printing medium.

### Description of the Invention

### [Treatment solution for inkjet printing]

A treatment solution for inkjet printing (also simply referred to as a "treatment solution" below) of the present invention contains a polyoxyethylene ether compound (A) having an aromatic ring (also referred to as a "compound (A)" below), a flocculant (B'), and water. The content of the compound (A) is 3% by mass or more.

In the present invention, the "polyoxyethylene ether compound having an aromatic ring" means an ether compound having one or more aromatic rings and two or more units derived from ethylene oxide in one molecule.

In the present invention, the phrase "containing a polyoxyethylene ether compound (A) having an aromatic ring, a flocculant (B'), and water" also means "obtained by blending a polyoxyethylene ether compound (A) having an aromatic ring, a flocculant (B'), and water."

From the viewpoint of providing high-quality printed materials in the image formation by inkjet printing, the treatment solution of the present invention is suitable for the treatment of a printing medium for inkjet printing, and more suitable for the treatment of a low-permeable printing medium for inkjet printing. Thus, the treatment solution of the present invention is preferably used as a pretreatment solution for inkjet printing.

The present invention is capable of providing high-quality printed materials having both good dot spreading properties and excellent image uniformity, even if the treatment solution is heat-dried after being applied to a low-permeable printing medium. The reason for this is not fully clear, but can be assumed as follows.

The polyoxyethylene ether compound having an aromatic ring in the treatment solution of the present invention contains units derived from ethylene oxide that have high affinity for solvent components in ink. When inkjet printing ink lands on a printing medium treated with the treatment solution of the present invention, the ethylene oxide-derived units can greatly enhance the wettability of the ink on the printing medium, and thus can help the ink dots to spread easily.

Since the polyoxyethylene ether compound has a highly hydrophobic aromatic ring in the molecule, when inkjet printing ink containing a resin component lands and spreads on the printing medium treated with the treatment solution of the present invention, the polyoxyethylene ether compound can swell the resin component in the ink and uniformly thicken all the ink dots, resulting in uniform aggregation. Moreover, the polyoxyethylene ether compound can reduce fluctuations in dot spread behavior caused by microscopic unevenness on the surface of the printing medium. Consequently, image uniformity can be improved.

Because of the presence of the highly hydrophobic aromatic ring, the polyoxyethylene ether compound may interact with a resin component or cellulose fibers contained in a coating layer that is formed on the surface of a low-permeable printing medium. Accordingly, even when water or the like is evaporated by heating and drying, the polyoxyethylene ether compound remains on the surface of the printing medium and can still exhibit the above effects.

Further, the polyoxyethylene ether compound is highly surface active. For this reason, after the treatment solution of the present invention is applied to the printing medium, precipitates of the flocculant, which includes, e.g., a polyvalent metal salt, a polyamine, and an organic acid, may be finely and evenly distributed on the printing medium. Therefore, when inkjet printing ink adheres to the printing medium treated with the treatment solution of the present invention, the flocculant (e.g., a polyvalent metal salt, a polyamine, or an organic acid) may be uniformly redissolved in the aqueous medium of the ink and dispersed throughout the ink dots. This can facilitate a uniform aggregation effect and promote ink thickening. Thus, the treatment solution of the present invention can prevent dot distortion and color bleeding, and can further improve image uniformity.

In the present invention, whether a printing medium is low-permeable or high-permeable depends on how much water the printing medium absorbs during 100 milliseconds of contact with pure water. The water absorption can be measured using an automatic scanning liquid absorptometer (e.g., KM500win manufactured by KUMAGAI RIKI KOGYO Co., Ltd.) in terms of the amount of water transferred during 100 milliseconds of contact with pure water at 23°C and 50% relative humidity.

The term "low-permeable" is a concept including both low-permeability and non-permeability, and means that the water absorption is 0 g/m² or more and 7 g/m² or less. The term "high-permeable" means that the water absorption is more than 7 g/m².

### <Compound (A)>

The treatment solution of the present invention contains a polyoxyethylene ether compound (A) having an aromatic ring. The compound (A) contained in the treatment solution of the present invention can control the wettability of ink on a low-permeable printing medium, even if the treatment solution is heat-dried after being applied to the low-permeable printing medium. Moreover, the compound (A) specifically interacts with the flocculant (B'), which includes, e.g., a polyvalent metal salt, a polyamine, and an organic acid, thereby enabling high-quality printed materials having both good dot spreading properties and excellent image uniformity.

The compound (A) may be used alone or in combination of two or more types.

Examples of the compound (A) include: polyoxyethylene alkylphenyl ethers, e.g., polyoxyethylene octylphenyl ether or polyoxyethylene dodecylphenyl ether; polyoxyethylene phenyl ethers, e.g., polyoxyethylene styrenated phenyl ether (including various polyoxyethylene styrenated phenyl ethers such as polyoxyethylene monostyrenated phenyl ether, polyoxyethylene distyrenated phenyl ether, and polyoxyethylene tristyrenated phenyl ether), polyoxyethylene phenyl ether, polyoxyethylene tribenzylphenyl ether, polyoxyethylene naphthyl ether, polyoxyethylene bisphenol A ether, or polyoxyethylene bisphenol F ether; and polyoxyethylene benzyl ethers, e.g., diethylene glycol monobenzyl ether, triethylene glycol monobenzyl ether, or polyoxyethylene benzyl ether (e.g., polyoxyethylene monobenzyl ether or polyoxyethylene dibenzyl ether). Among these, the compound (A) is preferably polyoxyethylene phenyl ethers, and more preferably one or more selected from the group consisting of polyoxyethylene phenyl ether and polyoxyethylene distyrenated phenyl ether from the viewpoint of dot spreading properties and image uniformity on the low-permeable printing medium.

The HLB value of the compound (A) is the average value of compounds contained in the compound (A).

The HLB value of the compound (A) is preferably 20 or less, more preferably 18 or less, even more preferably 16 or less, still more preferably 15 or less, and yet more preferably 14 or less from the viewpoint of dot spreading properties and image uniformity on the low-permeable printing medium. Furthermore, the HLB value of the compound (A) is preferably 10 or more, more preferably 11 or more, and even more preferably 12 or more from the viewpoint of dot spreading properties and image uniformity on the low-permeable printing medium.

In the present invention, the HLB value indicates the affinity of a surfactant for water and oil as a hydrophile-lipophile balance, and can be calculated by Griffin's method using the following formula. The catalog values of products may also be referred to, as long as they comply with Griffin's method. 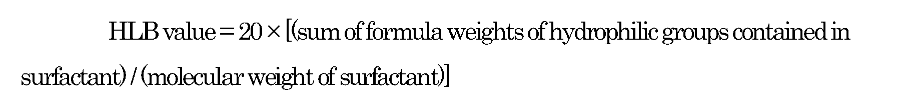 HLB value = 20 × [(sum of formula weights of hydrophilic groups contained in surfactant) / (molecular weight of surfactant)]

The hydrophilic groups may include, e.g., a hydroxyl group and an ethyleneoxy group.

Commercially available products of the compound (A) include, e.g., EMULGEN A-60, A-90, A-500, or B-66 manufactured by Kao Corporation, NOIGEN EA-87, EA-127, EA-137, EA-157, EA-167, EA-177, EA-197D, or EA-207D manufactured by DKS Co., Ltd., BLAUNON DSP-9, DSP-12.5, KTSP-16, TSP-50, or PH-5 manufactured by AOKI OIL INDUSTRIAL CO., LTD., and PhG-30 or PhG-55 manufactured by NIPPON NYUKAZAI CO., LTD.

### <Flocculant (B')>

The treatment solution of the present invention contains a flocculant (B').

The flocculant (B') contained in the treatment solution of the present invention reduces the dispersibility of dispersoids in inkjet printing ink and brings them together, which causes the ink to thicken or form precipitates. Therefore, the treatment solution of the present invention can prevent color bleeding due to coalescence of adjacent ink dots, improve image uniformity, and provide high-quality printed materials.

In the present invention, the dispersoids present in the inkjet printing ink include not only solid ink components such as pigments that are actually dispersed in the ink, but also ink components that are initially dissolved in the ink and rendered insoluble upon contact with the printing medium treated with the treatment solution of the present invention, leading to ink thickening or precipitation. Specific examples of the ink components that are dissolved in the ink and rendered insoluble upon contact with the printing medium treated with the treatment solution of the present invention include dyes and water-soluble resins.

The reason the dispersibility or solubility of the dispersoids is reduced when the ink comes into contact with the printing medium treated with the treatment solution of the present invention may be considered as follows: precipitates of the flocculant (B') on the printing medium are redissolved in the ink through contact between the ink and the printing medium; the flocculant (B') acts to decrease the thickness of an electric double layer that stabilizes the dispersoids in the ink, and makes it impossible for the dispersoids to remain apart.

The flocculant (B') is not particularly limited and may be, e.g., a component that would reduce the dispersibility of the dispersoids in the inkjet printing ink and bring them together. Examples of the flocculant (B') include a polyvalent metal salt, a polyamine, and an organic acid. These compounds may be used alone or in combination of two or more types.

The flocculant (B') is preferably one or more selected from the group consisting of a polyvalent metal salt, a polyamine, and an organic acid from the viewpoint of dot spreading properties and image uniformity on the low-permeable printing medium. Thus, the treatment solution of the present invention preferably contains one or more compounds (B) selected from the group consisting of a polyvalent metal salt, a polyamine, and an organic acid (also referred to as a "compound (B)" below). Further, the compound (B) is more preferably a polyvalent metal salt from the viewpoint of dot spreading properties and image uniformity on the low-permeable printing medium.

As described above, the treatment solution of the present invention that contains the compound (A), the flocculant (B'), and water is preferably used as a pretreatment solution for inkjet printing from the viewpoint of dot spreading properties and image uniformity on the low-permeable printing medium. From the same viewpoint, the flocculant (B') is preferably the compound (B). In other words, the composition containing a polyoxyethylene ether compound (A) having an aromatic ring, one or more compounds (B) selected from the group consisting of a polyvalent metal salt, a polyamine, and an organic acid, and water, in which the content of the compound (A) is 3% by mass or more, is suitable for use as a pretreatment solution for inkjet printing.

### [Polyvalent metal salt]

The polyvalent metal salt may be any salt composed of a polyvalent metal ion and an anion (i.e., a counterion of the polyvalent metal ion). Examples of the polyvalent metal ion include ions of calcium, magnesium, copper, nickel, zinc, barium, aluminum, titanium, strontium, chromium, cobalt, and iron. Among these, the polyvalent metal ion of the polyvalent metal salt is preferably a divalent metal ion or a trivalent metal ion, and more preferably a divalent metal ion from the viewpoint of providing high-quality printed materials having both good dot spreading properties and excellent image uniformity. Examples of the divalent metal ion include ions of elements belonging to Group 2 of the periodic table, and specifically include magnesium ion, calcium ion, and iron (II) ion. Examples of the trivalent metal ion include aluminum ion and iron (III) ion. Among these, the polyvalent metal ion is even more preferably one or more selected from the group consisting of a magnesium ion, a calcium ion, and an aluminum ion, still more preferably one or more selected from the group consisting of a magnesium ion and a calcium ion, and yet more preferably a magnesium ion from the viewpoint of providing high-quality printed materials having both good dot spreading properties and excellent image uniformity.

The anion of the polyvalent metal salt may be, e.g., an inorganic ion or an organic ion.

Examples of the inorganic ion include monovalent anions, e.g., nitrate ion or halide ion and divalent anions, e.g., sulfate ion.

Examples of the organic ion include organic acid ions, e.g., carboxylate ion.

Among these, the anion of the polyvalent metal salt is preferably an inorganic ion, more preferably one or more selected from the group consisting of a nitrate ion and a sulfate ion, and even more preferably a nitrate ion from the viewpoint of providing high-quality printed materials having both good dot spreading properties and excellent image uniformity and from the viewpoint of availability and economic efficiency.

The polyvalent metal salt is preferably one or more selected from the group consisting of magnesium nitrate, magnesium sulfate, calcium nitrate, and aluminum nitrate, more preferably one or more selected from the group consisting of magnesium nitrate, calcium nitrate, and aluminum nitrate, even more preferably one or more selected from the group consisting of magnesium nitrate and calcium nitrate, and still more preferably magnesium nitrate from the viewpoint of providing high-quality printed materials having both good dot spreading properties and excellent image uniformity.

The polyvalent metal salt may have water of hydration in its raw material form.

The polyvalent metal salt may be used alone or in combination of two or more types.

### [Polyamine]

The polyamine is a compound having multiple amino groups in the molecule.

The amino groups of the polyamine may be any of ammonia, a primary amine, or a monovalent functional group (-NH₂, -NHR, -NRR') obtained by removing one hydrogen atom from a secondary amine. In this case, R and R' represent a hydrocarbon group. The polyamine may be in the form of a salt.

The salt of the polyamine may be, e.g., an inorganic acid salt or an organic acid salt. Examples of the inorganic acid salt of the polyamine include hydrochloride, sulfate, nitrate, and phosphate. Examples of the organic acid salt of the polyamine include carboxylate and sulfonate. The polyamine may be a quaternary ammonium salt formed by quaternization of an amino group with a quaternizing agent.

The polyamine may be an alkanediamine. The alkanediamine is preferably one or more selected from the group consisting of ethylenediamine (1,2-diaminoethane), 1,2-diaminopropane, 1,3-diaminopropane, 1,4-diaminobutane, 1,5-pentamethylenediamine, 1,6-hexamethylenediamine, 1,7-heptamethylenediamine, and 1,8-octamethylenediamine from the viewpoint of providing high-quality printed materials having both good dot spreading properties and excellent image uniformity.

The polyamine is preferably a polymer having multiple amino groups in the molecule (also referred to as an "amino group-containing polymer" below) from the viewpoint of providing high-quality printed materials having both good dot spreading properties and excellent image uniformity.

The amino group-containing polymer is preferably a polymer that contains a constitutional unit derived from a polymerizable monomer having at least one amino group. The amino group-containing polymer may be in the form of a salt or may be a quaternary ammonium salt formed by quaternization of an amino group with a quaternizing agent.

The amino group-containing polymer and its salt are preferably one or more selected from the group consisting of polyethyleneimine, polyvinylamine, polyallylamine, polydiallylmethylamine, polydiallylethylamine, a dimethylamine/epichlorohydrin copolymer, a dimethylamine/ammonia/epichlorohydrin copolymer, and salts thereof from the viewpoint of providing high-quality printed materials having both good dot spreading properties and excellent image uniformity and from the viewpoint of availability and economic efficiency.

The quaternary ammonium salt of the amino group-containing polymer is preferably a diallyl quaternary ammonium salt polymer, and more preferably one or more selected from the group consisting of polydiallyldimethylammonium chloride, polydiallyldiethylammonium chloride, polydiallylmethylethylammonium ethyl sulfate, a diallyldimethylammonium chloride/acrylic acid copolymer, a diallyldimethylammonium chloride/acrylamide copolymer, and a diallyldimethylammonium chloride/acrylic acid/acrylamide copolymer from the viewpoint of providing high-quality printed materials having both good dot spreading properties and excellent image uniformity and from the viewpoint of availability and economic efficiency.

The polyamine is preferably in the form of a salt. From the viewpoint of effectively reducing the dispersibility or solubility of dispersoids in inkjet printing ink by increasing the salt density and thus providing high-quality printed materials having both good dot spreading properties and excellent image uniformity, the salt of the polyamine is preferably a salt of the amino group-containing polymer, more preferably one or more selected from the group consisting of polydiallyldimethylammonium chloride, polydiallylmethylethylammonium ethyl sulfate, a dimethylamine/epichlorohydrin copolymer, polyethyleneimine hydrochloride, and polyallylamine hydrochloride, and even more preferably one or more selected from the group consisting of polydiallyldimethylammonium chloride and a dimethylamine/epichlorohydrin copolymer.

From the same viewpoint, the salt of the amino group-containing polymer is preferably polydiallyldimethylammonium chloride or a dimethylamine/epichlorohydrin copolymer. The salt of the amino group-containing polymer is more preferably polydiallyldimethylammonium chloride from the viewpoint of dot spreading properties after drying, and even more preferably a dimethylamine/epichlorohydrin copolymer from the viewpoint of image uniformity after drying.

The weight average molecular weight of the salt of the amino group-containing polymer is preferably 5,000 or more from the viewpoint of increasing the salt density and improving image uniformity of printed materials when a low-permeable printing medium is used. Furthermore, the weight average molecular weight of the salt of the amino group-containing polymer is preferably 100,000 or less, more preferably 50,000 or less, and even more preferably 25,000 or less from the viewpoint of preventing thickening of the treatment solution, applying the treatment solution evenly to the printing medium, and improving image uniformity of printed materials. The average molecular weight of the salt of the amino group-containing polymer can be measured by gel permeation chromatography (GPC). When commercially available products are used as the salt of the amino group-containing polymer, the average molecular weight of the salt of the amino group-containing polymer may be determined by referring to the catalog value of each product.

Preferred examples of commercially available products as the salt of the amino group-containing polymer include "PAS" series manufactured by NITTOBO MEDICAL CO., LTD. and "UNISENCE" series manufactured by SENKA Corporation.

The polyamine may be used alone or in combination of two or more types.

### [Organic acid]

The organic acid may be added to the treatment solution in the form of either an acid or a salt, and preferably in the form of a salt.

Preferred examples of the organic acid include: monocarboxylic acids, e.g., acetic acid or propionic acid; polycarboxylic acids, e.g., poly(meth)acrylic acid, oxalic acid, malonic acid, maleic acid, succinic acid, glutaric acid, or fumaric acid; hydroxycarboxylic acids, e.g., ascorbic acid, glycolic acid, malic acid, citric acid, tartaric acid, or lactic acid; heterocyclic carboxylic acids, e.g., pyrrolidone carboxylic acid, pyrone carboxylic acid, pyrrole carboxylic acid, furancarboxylic acid, pyridine carboxylic acid, coumaric acid, thiophene carboxylic acid, or nicotinic acid; and derivatives of these compounds.

The organic acid is preferably a hydroxycarboxylic acid, more preferably a hydroxypolycarboxylic acid, even more preferably one or more selected from the group consisting of a citric acid, a tartaric acid, and a lactic acid, and still more preferably a lactic acid from the viewpoint of providing high-quality printed materials having both good dot spreading properties and excellent image uniformity.

The organic acid may be in the form of a salt. When the organic acid forms a metal salt, it should be included in the polyvalent metal salt described above. The salt of the organic acid is preferably an ammonium salt from the viewpoint of providing high-quality printed materials having both good dot spreading properties and excellent image uniformity.

The organic acid may be used alone or in combination of two or more types.

From the viewpoint of providing high-quality printed materials having both good dot spreading properties and excellent image uniformity, the treatment solution of the present invention preferably contains one or more selected from the group consisting of polyoxyethylene phenyl ether and polyoxyethylene styrenated phenyl ether as the compound (A) and a polyvalent metal salt as the compound (B). The treatment solution more preferably contains one or more selected from the group consisting of polyoxyethylene phenyl ether and polyoxyethylene styrenated phenyl ether as the compound (A) and one or more polyvalent metal salts selected from the group consisting of magnesium nitrate, calcium nitrate, and aluminum nitrate as the compound (B). The treatment solution even more preferably contains one or more selected from the group consisting of polyoxyethylene phenyl ether and polyoxyethylene styrenated phenyl ether as the compound (A) and one or more polyvalent metal salts selected from the group consisting of magnesium nitrate and calcium nitrate as the compound (B). The treatment solution still more preferably contains one or more selected from the group consisting of polyoxyethylene phenyl ether and polyoxyethylene styrenated phenyl ether as the compound (A) and magnesium nitrate as the compound (B).

### <Water>

The treatment solution of the present invention contains water.

The water contained in the treatment solution of the present invention is preferably pure water or ion exchanged water from the viewpoint of preventing the contamination of unwanted substances.

The treatment solution of the present invention may further contain, if necessary, other components, including, e.g., a water-soluble organic solvent, a pH adjuster, a surfactant, a colorant, an antifoaming agent, a preservative and antifungal agent, and a rust inhibitor, other than the compound (A) and the compound (B).

### (Water-soluble organic solvent)

The treatment solution of the present invention may further contain a water-soluble organic solvent from the viewpoint of ensuring sufficient solubility of the compound (A) in the treatment solution and providing high-quality printed materials having both good dot spreading properties and excellent image uniformity.

Examples of the water-soluble organic solvent include: polyhydric alcohols; ethers, e.g., polyhydric alcohol alkyl ethers or polyhydric alcohol aryl ethers; nitrogen-containing heterocyclic compounds; amides; amines; and sulfur-containing compounds.

Examples of the polyhydric alcohols include diols, e.g., ethylene glycol, diethylene glycol, propylene glycol (1,2-propanediol), 1,3-propylene glycol, dipropylene glycol (isomer mixture), 1,2-butanediol, 1,3-butanediol, 1,4-butanediol, 2,3-butanediol, 3-methyl-1,3-butanediol, triethylene glycol, polyethylene glycol, polypropylene glycol, 1,2-pentanediol, 1,3-pentanediol, 1,4-pentanediol, 2,4-pentanediol, 1,5-pentanediol, 1,2-hexanediol, 1,6-hexanediol, 1,3-hexanediol, 2,5-hexanediol, 1,5-hexanediol, 2-methyl-2,4-pentanediol, 3-methyl-1,5-pentanediol, 1,4-cyclohexanediol, 1,7-heptanediol, 1,8-octanediol, or 1,2-octanediol.

Examples of the polyhydric alcohol alkyl ethers include (poly)alkylene glycol monoalkyl ethers, e.g., ethylene glycol monoethyl ether, ethylene glycol monobutyl ether, diethylene glycol monomethyl ether, diethylene glycol monoethyl ether, diethylene glycol monoisopropyl ether, diethylene glycol monobutyl ether, triethylene glycol monobutyl ether, tetraethylene glycol monomethyl ether, propylene glycol monomethyl ether, propylene glycol monobutyl ether, or dipropylene glycol monoethyl ether.

Examples of the polyhydric alcohol aryl ethers include ethylene glycol monophenyl ether and ethylene glycol monobenzyl ether.

Examples of the nitrogen-containing heterocyclic compounds include 2-pyrrolidone, N-methyl-2-pyrrolidone, N-hydroxyethyl-2-pyrrolidone, 1,3-dimethyl-2-imidazolidinone, and ε-caprolactam.

Examples of the amides include formamide, N-methylformamide, N,N-dimethylformamide, 3-methoxy-N,N-dimethylpropionamide, and 3-butoxy-N,N-dimethylpropionamide.

Examples of the amines include monoethanolamine, diethanolamine, triethanolamine, and triethylamine. These compounds are also used as a pH adjuster.

Examples of the sulfur-containing compounds include dimethyl sulfoxide, sulfolane, and thiodiethanol.

Water-soluble organic solvents other than those listed above include, e.g., propylene carbonate and ethylene carbonate.

Among these, the water-soluble organic solvent is preferably one or more selected from the group consisting of polyhydric alcohols and polyhydric alcohol alkyl ethers, and more preferably polyhydric alcohols from the viewpoint of providing high-quality printed materials having both good dot spreading properties and excellent image uniformity.

From the same viewpoint, the polyhydric alcohols are preferably diols, more preferably one or more selected from the group consisting of ethylene glycol, diethylene glycol, propylene glycol (1,2-propanediol), 1,3-propylene glycol, dipropylene glycol (isomer mixture), 1,2-butanediol, 1,3-butanediol, and 1,4-butanediol, and even more preferably one or more selected from the group consisting of diethylene glycol, propylene glycol (1,2-propanediol), and dipropylene glycol (isomer mixture).

From the same viewpoint, the polyhydric alcohol alkyl ethers are preferably (poly)alkylene glycol monoalkyl ethers, more preferably one or more selected from the group consisting of ethylene glycol monobutyl ether, diethylene glycol monomethyl ether, diethylene glycol monoisopropyl ether, diethylene glycol monobutyl ether, and triethylene glycol monobutyl ether, and even more preferably one or more selected from the group consisting of diethylene glycol monobutyl ether and triethylene glycol monobutyl ether.

The water-soluble organic solvent may be used alone or in combination of two or more types.

### (pH adjuster)

The treatment solution of the present invention may contain a pH adjuster.

The pH adjuster is an agent that reduces pH fluctuations due to environmental changes and maintains a constant pH of the treatment solution.

The pH adjuster may be selected as appropriate depending on the pH of the treatment solution of the present invention.

A basic compound may be used as a pH adjuster to basify the treatment solution of the present invention. Examples of the basic compound include: alkanolamines, e.g., dimethylethanolamine, diethanolamine, triethanolamine, or N-methyldiethanolamine; primary amine, secondary amine, tertiary amine, and quaternary ammonium salt; aqueous ammonia; alkali metal hydroxides, e.g., lithium hydroxide, sodium hydroxide, or potassium hydroxide; and alkali metal carbonates, e.g., lithium carbonate, sodium carbonate, potassium carbonate, or sodium hydrogen carbonate.

When the pH adjuster is an alkanolamine, a primary amine, a secondary amine, a tertiary amine, or a quaternary ammonium salt, these amines or the quaternary ammonium salt are preferably monovalent.

An acidic compound is used as a pH adjuster to acidify the treatment solution of the present invention. Examples of the acidic compound include: inorganic acids, e.g., hydrochloric acid, sulfuric acid, nitric acid, phosphoric acid, or boric acid; organic acids, e.g., acetic acid, citric acid, succinic acid, tartaric acid, malic acid, fumaric acid, malonic acid, ascorbic acid, or glutamic acid; and alkali metal acetates, e.g., lithium acetate or sodium acetate.

The pH adjuster may be used alone or in combination of two or more types.

### (Surfactant)

The treatment solution of the present invention may contain a surfactant.

The surfactant is preferably a nonionic surfactant.

Examples of the nonionic surfactant include: polyoxyalkylene alkyl ether surfactant; acetylene alcohol surfactants, e.g., acetylene glycol surfactant; polyhydric alcohol surfactant; fatty acid alkanolamide; silicone surfactant; and fluorine surfactant. Among these, the surfactant is preferably an acetylene alcohol surfactant, and more preferably an acetylene glycol surfactant from the viewpoint of providing high-quality printed materials having both good dot spreading properties and excellent image uniformity.

Examples of the acetylene glycol surfactant include 2,4,7,9-tetramethyl-5-decyne-4,7-diol, 3,6-dimethyl-4-octyne-3,6-diol, and ethylene oxide adducts of these diols.

Examples of the acetylene alcohol surfactant other than the acetylene glycol surfactant include 3,5-dimethyl-1-hexyne-3-ol, 2,4-dimethyl-5-hexyne-3-ol, and ethylene oxide adducts of these monools.

The sum (n) of the average number of moles of ethyleneoxy group (EO) added in the ethylene oxide adduct is preferably 0 or more, and is also preferably 20 or less, and more preferably 10 or less from the viewpoint of providing high-quality printed materials having both good dot spreading properties and excellent image uniformity.

Commercially available products of the nonionic surfactant include, e.g., "SURFYNOL" series manufactured by Nissin Chemical Industry Co., Ltd. and Air Products & Chemicals and "ACETYLENOL" series manufactured by Kawaken Fine Chemicals Co., Ltd.

The surfactant may be used alone or in combination of two or more types.

The treatment solution of the present invention may contain a colorant, as described later, to the extent that it does not interfere with the effects of the present invention. When the treatment solution of the present invention contains a colorant, the colorant is preferably a pigment or a hydrophobic dye in terms of water resistance, and is also preferably a pigment in terms of high weather resistance.

### (Composition of treatment solution)

The content of the compound (A) in the treatment solution of the present invention is 3% by mass or more, preferably 5% by mass or more, more preferably 10% by mass or more, even more preferably 15% by mass or more, and still more preferably 20% by mass or more from the viewpoint of providing high-quality printed materials having both good dot spreading properties and excellent image uniformity. From the same viewpoint as described above and from the viewpoint of economic efficiency, the content of the compound (A) is preferably 60% by mass or less, more preferably 50% by mass or less, even more preferably 45% by mass or less, and still more preferably 40% by mass or less. The content of the compound (A) is yet more preferably 30% by mass or more, and much more preferably 35% by mass or more from the viewpoint of improving dot spreading properties. Furthermore, the content of the compound (A) is yet more preferably 30% by mass or less, and much more preferably 25% by mass or less from the viewpoint of improving image uniformity.

The content of the compound (B) in the treatment solution of the present invention is preferably 1% by mass or more, more preferably 3% by mass or more, even more preferably 5% by mass or more, still more preferably 10% by mass or more, and yet more preferably 13% by mass or more from the viewpoint of providing high-quality printed materials having both good dot spreading properties and excellent image uniformity. From the same viewpoint, the content of the compound (B) is preferably 40% by mass or less, more preferably 35% by mass or less, even more preferably 30% by mass or less, still more preferably 25% by mass or less, yet more preferably 20% by mass or less, and much more preferably 17% by mass or less.

When the compound (B) is a hydrate of the polyvalent metal salt having water of hydration in its raw material form, the content of the polyvalent metal salt in the treatment solution of the present invention means the content of an anhydride of the polyvalent metal salt.

The content of water in the treatment solution of the present invention is preferably 85% by mass or less, more preferably 80% by mass or less, even more preferably 75% by mass or less, still more preferably 70% by mass or less, and yet more preferably 65% by mass or less from the viewpoint of providing high-quality printed materials having both good dot spreading properties and excellent image uniformity. From the same viewpoint as described above and from the viewpoint of economic efficiency, the content of water is preferably 15% by mass or more, more preferably 20% by mass or more, even more preferably 30% by mass or more, still more preferably 35% by mass or more, and yet more preferably 40% by mass or more.

When the treatment solution of the present invention contains a hydrate of the polyvalent metal salt having water of hydration in its raw material form, the content of water in the treatment solution also includes the water content of the hydrate of the polyvalent metal salt.

The mass ratio [compound (B)/compound (A)] of the content of the compound (B) to the content of the compound (A) in the treatment solution of the present invention is preferably 0.1 or more, more preferably 0.2 or more, even more preferably 0.3 or more, and still more preferably 0.4 or more from the viewpoint of providing high-quality printed materials having both good dot spreading properties and excellent image uniformity. From the same viewpoint, the mass ratio [compound (B)/compound (A)] is preferably 15 or less, more preferably less than 15, even more preferably 8 or less, still more preferably 4 or less, yet more preferably 3 or less, much more preferably 2 or less, further preferably 1 or less, and even further preferably 0.80 or less.

The mass ratio [compound (A)/water] of the content of the compound (A) to the content of water in the treatment solution of the present invention is preferably 0.01 or more, more preferably 0.04 or more, even more preferably 0.06 or more, still more preferably 0.07 or more, yet more preferably 0.10 or more, and much more preferably 0.15 or more from the viewpoint of providing high-quality printed materials having both good dot spreading properties and excellent image uniformity. From the same viewpoint as described above and from the viewpoint of economic efficiency, the mass ratio [compound (A)/water] is preferably 2.0 or less, more preferably 1.5 or less, and even more preferably 1.0 or less. The mass ratio [compound (A)/water] is further preferably 0.20 or more, even further preferably 0.25 or more, still further preferably 0.5 or more, and yet further preferably 0.8 or more from the viewpoint of improving image uniformity. Furthermore, the mass ratio [compound (A)/water] is still more preferably 0.50 or less, yet more preferably 0.40 or less, and much more preferably 0.20 or less from the viewpoint of improving dot spreading properties.

When the treatment solution of the present invention further contains a water-soluble organic solvent, the content of the water-soluble organic solvent in the treatment solution is preferably 30% by mass or less, more preferably 15% by mass or less, even more preferably 5% by mass or less, and still more preferably 2% by mass or less from the viewpoint of providing high-quality printed materials having both good dot spreading properties and excellent image uniformity. When the treatment solution of the present invention contains two or more types of water-soluble organic solvents, the content of the water-soluble organic solvent is the total content of the two or more types.

The content of the colorant in the treatment solution of the present invention is preferably 1% by mass or less, more preferably 0.1% by mass or less, even more preferably 0.01% by mass or less, and still more preferably 0% by mass. In other words, it is much more preferable that the treatment solution of the present invention contains no colorant.

If the content of the colorant in the treatment solution of the present invention falls within the above ranges, the treatment solution can be used with inkjet printing ink to form images by inkjet printing without affecting the hue of the ink.

The viscosity of the treatment solution of the present invention is not particularly limited. The viscosity of the treatment solution at 25°C is preferably 1 mPa·s or more, more preferably 3 mPa·s or more, and even more preferably 4 mPa·s or more, and is also preferably 100 mPa·s or less, more preferably 80 mPa·s or less, even more preferably 50 mPa·s or less, still more preferably 30 mPa·s or less, yet more preferably 20 mPa·s or less, and much more preferably 10 mPa·s or less from the viewpoint of providing high-quality printed materials having both good dot spreading properties and excellent image uniformity. The viscosity of the treatment solution of the present invention may be measured by a method as described in Examples.

The pH of the treatment solution of the present invention at 20°C is preferably 3.5 or more, more preferably 4 or more, even more preferably 4.5 or more, still more preferably 5 or more, yet more preferably 6 or more, and much more preferably 7 or more, and is also preferably 11.0 or less, more preferably 10.5 or less, and even more preferably 10.0 or less from the viewpoint of preventing metallic corrosion of members. The pH of the treatment solution of the present invention may be measured by a method as described in Examples.

### (Preparation of treatment solution)

The treatment solution of the present invention is used by appropriately mixing the compound (A), the compound (B), water, and optionally the other components described above. The pH of the treatment solution can be appropriately adjusted with the pH adjuster.

### [Ink set for inkjet printing]

### <Inkjet printing ink>

Hereinafter, inkjet printing ink will be described. The inkjet printing ink is applied to a printing medium treated with the treatment solution of the present invention (also referred to as a "surface-treated printing medium" below).

The inkjet printing ink preferably contains a colorant and water from the viewpoint of providing high-quality printed materials having both good dot spreading properties and excellent image uniformity. In the present invention, the treatment solution in combination with the ink containing a colorant and water can be used as an ink set for inkjet printing.

### [Colorant]

The colorant used for the inkjet printing ink may be either a dye or a pigment. In particular, the colorant is preferably a pigment because it has, e.g., water resistance, light resistance, weather resistance, and gas resistance.

The pigment may be either a known organic or inorganic pigment. The pigment may be used alone or in combination of two or more types, or a mixed crystal may also be used.

Examples of the inorganic pigment include titanium oxide, iron oxide, calcium carbonate, barium sulfate, aluminum hydroxide, barium yellow, cadmium red, and chromium yellow. The inorganic pigment may be carbon black produced by a known method such as a contact method, a furnace method, or a thermal method.

Examples of the organic pigment include azo pigment, polycyclic pigment (e.g., phthalocyanine pigment, perylene pigment, perinone pigment, anthraquinone pigment, quinacridone pigment, dioxazine pigment, indigo pigment, thioindigo pigment, isoindolinone pigment, or quinophthalone pigment), dye chelate (e.g., basic dye chelate or acid dye chelate), nitro pigment, nitroso pigment, and aniline black.

The pigment may be in the form of hollow particles, e.g., resin hollow particles or inorganic hollow particles. Moreover, a glossy color pigment or a metallic pigment, such as gold or silver tones, can also be used.

Specific examples of pigments for black ink include: carbon blacks (C.I. Pigment Black 7), e.g., furnace black, lamp black, acetylene black, or channel black; metals, e.g., copper, iron (C.I. Pigment Black 11), or titanium oxide; and organic pigments, e.g., aniline black (C.I. Pigment Black 1).

Specific examples of pigments for chromatic ink include one or more product numbers selected from the group consisting of C.I. Pigment Yellow, C.I. Pigment Orange, C.I. Pigment Red, C.I. Pigment Violet, C.I. Pigment Blue, and C.I. Pigment Green.

The dye is not particularly limited and may be, e.g., an acid dye, a basic dye, a direct dye, or a reactive dye. The dye may be used alone or in combination of two or more types.

Examples of the dye include product numbers selected from the group consisting of C.I. Acid Yellow, C.I. Acid Red, C.I. Acid Blue, C.I. Acid Black, C.I. Food Black, C.I. Direct Yellow, C.I. Direct Red, C.I. Direct Blue, C.I. Direct Black, C.I. Reactive Red, and C.I. Reactive Black.

When the inkjet printing ink contains a pigment, the pigment is dispersed in a medium of the ink. The pigment present in the inkjet printing ink may be dispersed using a dispersant, e.g., a resin (also referred to as a "pigment dispersion resin" below) or a surfactant or may be dispersed without using a dispersant, which is referred to as a self-dispersing pigment. Among these, the pigment present in the inkjet printing ink is preferably dispersed with the pigment dispersion resin.

The pigment dispersion resin may be either a water-soluble resin or a water-insoluble resin.

Whether the resin is "water-soluble" or "water-insoluble" is determined as follows. A resin is dried at 105°C for 2 hours to reach a constant weight and subsequently dissolved in 100 g of water at 25°C until saturation. Consequently, the resin is deemed "water-soluble" if the amount of the resin dissolved is more than 10 g and "water-insoluble" if it is 10 g or less. As will be described later, when a resin has anionic groups and the anionic groups are neutralized with a neutralizing agent, the amount of the resin dissolved is measured in the presence of the neutralizing agent on the condition that the mass ratio of the resin to the neutralizing agent is the same as that in the inkjet printing ink.

Specifically, from the viewpoint of improving dispersion stability of the pigment, the pigment in the inkjet printing ink may take any of the following forms: (a) pigmentparticles with a water-soluble resin adsorbed on their surface; (b) pigment particles with a water-soluble surfactant or a water-dispersible surfactant adsorbed on their surface; (c) self-dispersing pigment particles with a hydrophilic functional group introduced chemically or physically onto their surface, which are dispersed without any pigment dispersion resin or surfactant; and (d) pigment particles coated with a water-insoluble resin.

The pigments in the form of (a) to (d) are preferably anionic. As a result, polyvalent metal ions derived from the polyvalent metal salt contained in the treatment solution or ammonium cations derived from the amino groups of the polyamine contained in the treatment solution electrostatically interact with anionic groups on the pigment surface. Such an interaction reduces the dispersibility of the pigment in the ink and allows the pigment to be aggregated. Thus, high-quality printed materials having both good dot spreading properties and excellent image uniformity can be provided when a low-permeable printing medium is used. In view of this, in the form (a), the water-soluble resin preferably has anionic groups. In the form (b), the water-soluble surfactant or the water-dispersible surfactant preferably has anionic groups. In the form (c), the hydrophilic functional group introduced onto the pigment surface preferably has anionic groups. In the form (d), the water-insoluble resin preferably has anionic groups.

Examples of the anionic groups include: groups that dissociate to release hydrogen ions, e.g., carboxy group (-COOM), sulfonic acid group (-SO₃M), or phosphate group (-OPO₃M₂); and their dissociated ionic forms (-COO⁻, -SO₃⁻, -OPO₃²⁻, or -OPO₃⁻M). In the chemical formulas, M represents a hydrogen atom, an alkali metal, ammonium, or organic ammonium.

Among these, the form of the pigment in the inkjet printing ink is preferably one or more selected from the group consisting of the form (c) and the form (d), and more preferably the form (d) from the viewpoint of reducing the dispersibility of dispersoids in the ink with the polyvalent metal ions and/or the polyamine to facilitate a good aggregation effect and from the viewpoint of providing high-quality printed materials having both good dot spreading properties and excellent image uniformity when a low-permeable printing medium is used.

When the pigment in the inkjet printing ink is form (d), the way of coating the pigment with the water-insoluble resin may include, e.g., encapsulating the pigment in the water-insoluble resin, uniformly dispersing the pigment in the water-insoluble resin, exposing the pigment on the surface of the water-insoluble resin particles, or adsorbing the water-insoluble resin on the pigment.

The form (d) of the pigment in the inkjet printing ink is preferably such that the pigment is coated with a water-insoluble resin having a crosslinked structure. The water-insoluble resin having a crosslinked structure preferably contains two-dimensional polymer components composed mainly of linear chains, which may have branched chains, and components derived from a crosslinking agent. In this crosslinked structure, the two-dimensional polymer components would be linked by the components derived from the crosslinking agent to form a three-dimensional structure.

When the pigment in the inkjet printing ink is form (d), the type of water-insoluble resin used to disperse the pigment, i.e., the pigment dispersion resin is not particularly limited.

Specific examples of the water-insoluble resin include (meth)acrylic resin, styrene/(meth)acrylic resin, maleic acid resin, styrene/maleic acid resin, urethane resin, and polyester resin. Among these, the water-insoluble resin is preferably one or more selected from the group consisting of (meth)acrylic resin, styrene/(meth)acrylic resin, urethane resin, and polyester resin, and more preferably one or more selected from the group consisting of (meth)acrylic resin and styrene/(meth)acrylic resin from the viewpoint of reducing the dispersibility of dispersoids in the ink with polyvalent metal ions derived from the polyvalent metal salt or ammonium cations derived from the amino groups of the polyamine to easily control the aggregation effect and from the viewpoint of providing high-quality printed materials having both good dot spreading properties and excellent image uniformity when a low-permeable printing medium is used.

In the present specification, the term "(meth)acrylic" means acrylic or methacrylic.

The water-insoluble resin may be synthesized products obtained by any known method or commercially available products. The water-insoluble resin may be used alone or in combination of two or more types.

The number average molecular weight of the pigment dispersion resin is preferably 5,000 or more, more preferably 7,000 or more, and even more preferably 10,000 or more, and is also preferably 100,000 or less, more preferably 50,000 or less, and even more preferably 30,000 or less. The number average molecular weight may be measured by a method as described in Examples.

The acid value of the pigment dispersion resin is preferably 5 mgKOH/g or more, more preferably 50 mgKOH/g or more, even more preferably 100 mgKOH/g or more, still more preferably 150 mgKOH/g or more, and yet more preferably 200 mgKOH/g or more, and is also preferably 800 mgKOH/g or less, more preferably 500 mgKOH/g or less, and even more preferably 300 mgKOH/g or less.

The acid value of the pigment dispersion resin may be determined by a method as described in Examples, but can also be calculated from the mass ratio of the constituent monomers.

### [Fixing resin]

The inkjet printing ink may contain a resin that functions as a fixing aid (also referred to as a "fixing resin" below). The fixing resin present in the inkjet printing ink is preferably in the form of a resin that does not cover the pigment, and more preferably in the form of resin particles that do not contain the pigment.

The fixing resin is not particularly limited and may be selected as appropriate depending on the purpose. Specific examples of the fixing resin include urethane resin, polyester resin, acrylic resin, vinyl acetate resin, styrene resin, butadiene resin, styrene/butadiene resin, vinyl chloride resin, styrene/acrylic resin, and acrylic silicone resin.

A particulate resin may be used as the fixing resin and mixed with, e.g., a colorant, water, and an organic solvent to form ink. The fixing resin may be either synthesized products or commercially available products.

The fixing resin may be used alone or in combination of two or more types.

### [Wax]

The inkjet printing ink may contain wax.

In the present specification, the term "wax" means an organic substance that is solid or semi-solid at room temperature (25°C) and changes to a liquid when heated. The phrase "wax is semi-solid" means that the wax deforms and flows when a force is applied to the wax, but can maintain a certain shape when no force is applied to the wax. The melting point of the wax, i.e., the temperature at which it melts into a liquid when heated is 45°C or more.

The wax may be natural wax or synthetic wax.

Examples of the natural wax include: petroleum wax, e.g., paraffin wax or microcrystalline wax; vegetable wax, e.g., carnauba wax, candelilla wax, or rice wax; and animal wax, e.g., lanolin or beeswax.

Examples of the synthetic wax include: synthetic hydrocarbon wax, e.g., polyolefin wax or Fischer-Tropsch wax; silicone wax; and modified wax, e.g., paraffin wax derivative, montan wax derivative, or microcrystalline wax derivative. Among these, the wax is preferably polyolefin wax composed mainly of olefin monomers.

The wax may be used alone or in combination of two or more types.

The inkjet printing ink preferably contains wax as a dispersion (also referred to as a "wax dispersion" below).

The wax dispersion is not particularly limited and may be obtained, e.g., by the emulsification of wax with a known surfactant. The surfactant may be, e.g., a nonionic surfactant or an anionic surfactant.

Examples of the nonionic surfactant include ethylene oxide adducts of higher alcohols and ethylene oxide adducts of alkylated phenols.

Examples of the anionic surfactant include: sulfate ester salt or phosphate ester salt based on ethylene oxide adducts of higher alcohols; and alkylated benzenesulfonate.

Among these, the wax dispersion is preferably a nonionic wax dispersion obtained by the emulsification of wax with a nonionic surfactant, and more preferably a nonionic polyolefin wax dispersion from the viewpoint of improving ink ejection stability and image fastness of printed materials.

Preferred examples of commercially available products of the wax dispersion include "HYTEC E" series manufactured by TOHO CHEMICAL INDUSTRY CO., LTD., "AQUACER" series manufactured by BYK, "SELOSOL" series manufactured by Chukyo Yushi Co., Ltd., and "CHEMIPEARL" series manufactured by Mitsui Chemicals, Inc.

### [Water]

The medium of the inkjet printing ink is preferably an aqueous medium. In other words, the inkjet printing ink is preferably water-based ink containing water.

In this context, the term "water-based" means that water accounts for the largest proportion on a mass basis in the medium of the inkjet printing ink.

Since the inkjet printing ink contains an aqueous medium, the aqueous medium is supplied to the printing medium treated with the treatment solution, and the polyvalent metal salt, the polyamine, or the organic acid which has been precipitated on the printing medium is redissolved in the aqueous medium. Thus, high-quality printed materials having both good dot spreading properties and excellent image uniformity can be provided when a low-permeable printing medium is used.

The water contained in the inkjet printing ink is preferably ion exchanged water, deionized water, or distilled water.

### [Water-soluble organic solvent]

The inkjet printing ink may further contain a water-soluble organic solvent as an aqueous medium. Examples of the water-soluble organic solvent contained in the ink include: polyhydric alcohols; ethers, e.g., polyhydric alcohol alkyl ethers or polyhydric alcohol aryl ethers; nitrogen-containing heterocyclic compounds; amides; amines; and sulfur-containing compounds, as listed for the water-soluble organic solvent contained in the treatment solution described above. Among these, the water-soluble organic solvent is preferably one or more selected from the group consisting of polyhydric alcohols and polyhydric alcohol alkyl ethers, and more preferably any combination of polyhydric alcohols and polyhydric alcohol alkyl ethers from the viewpoint of providing high-quality printed materials having both good dot spreading properties and excellent image uniformity.

From the environmental viewpoint, the content of water in the aqueous medium of the inkjet printing ink is preferably 51% by mass or more, more preferably 55% by mass or more, even more preferably 60% by mass or more, and still more preferably 65% by mass or more, and is also preferably 95% by mass or less, more preferably 90% by mass or less, even more preferably 85% by mass or less, and still more preferably 80% by mass or less.

The inkjet printing ink may contain, e.g., a surfactant, an antifoaming agent, a preservative and antifungal agent, a rust inhibitor, or a pH adjuster, if necessary.

### (Composition of inkjet printing ink)

The content of the colorant in the inkjet printing ink is preferably 2% by mass or more, more preferably 3% by mass or more, and even more preferably 4% by mass or more from the viewpoint of improving the image density of printed materials. Furthermore, the content of the colorant is preferably 20% by mass or less, more preferably 15% by mass or less, and even more preferably 10% by mass or less from the viewpoint of providing high-quality printed materials having both good dot spreading properties and excellent image uniformity.

When the inkjet printing ink contains a pigment dispersion resin, the content of the pigment dispersion resin in the ink is preferably 2% by mass or more, more preferably 4% by mass or more, and even more preferably 6% by mass or more from the viewpoint of ensuring dispersion stability of the pigment and providing high-quality printed materials having both good dot spreading properties and excellent image uniformity. Furthermore, the content of the pigment dispersion resin is preferably 20% by mass or less, more preferably 15% by mass or less, and even more preferably 10% by mass or less from the viewpoint of improving the image density of printed materials.

When the inkjet printing ink contains the pigment dispersion resin, the mass ratio [pigment/pigment dispersion resin] of the content of the pigment to the content of the pigment dispersion resin in the ink is preferably 0.30 or more, more preferably 0.50 or more, and even more preferably 0.70 or more from the viewpoint of improving the image density of printed materials. Furthermore, the mass ratio [pigment/pigment dispersion resin] is preferably 1.00 or less, more preferably 0.90 or less, and even more preferably 0.80 or less from the viewpoint of ensuring dispersion stability of the pigment and providing high-quality printed materials having both good dot spreading properties and excellent image uniformity.

When the inkjet printing ink contains a fixing resin, the content of the fixing resin in the ink is preferably 0.5% by mass or more, more preferably 1% by mass or more, and even more preferably 1.5% by mass or more from the viewpoint of providing high-quality printed materials having both good dot spreading properties and excellent image uniformity. Furthermore, the content of the fixing resin is preferably 10% by mass or less, more preferably 5% by mass or less, and even more preferably 3% by mass or less from the viewpoint of improving the image density of printed materials.

When the inkjet printing ink contains wax, the content of the wax in the ink is preferably 0.3% by mass or more, more preferably 0.5% by mass or more, and even more preferably 0.8% by mass or more, and is also preferably 7% by mass or less, more preferably 5% by mass or less, and even more preferably 3% by mass or less from the viewpoint of providing high-quality printed materials having both good dot spreading properties and excellent image uniformity.

When the inkjet printing ink contains a water-soluble organic solvent, the content of the water-soluble organic solvent in the ink is preferably 15% by mass or more, more preferably 20% by mass or more, and even more preferably 25% by mass or more, and is also preferably 45% by mass or less, more preferably 40% by mass or less, and even more preferably 35% by mass or less from the viewpoint of providing high-quality printed materials having both good dot spreading properties and excellent image uniformity.

When the inkjet printing ink contains the water-soluble organic solvent, and the water-soluble organic solvent is composed of any combination of polyhydric alcohols and polyhydric alcohol alkyl ethers, the mass ratio [polyhydric alcohol alkyl ethers/polyhydric alcohols] of the content of the polyhydric alcohol alkyl ethers to the content of the polyhydric alcohols in the ink is preferably 0.1 or more, more preferably 0.2 or more, and even more preferably 0.3 or more, and is also preferably 0.9 or less, more preferably 0.7 or less, and even more preferably 0.5 or less from the viewpoint of providing high-quality printed materials having both good dot spreading properties and excellent image uniformity.

The content of water in the inkjet printing ink is preferably 40% by mass or more, more preferably 45% by mass or more, even more preferably 50% by mass or more, and still more preferably 55% by mass or more, and is also preferably 75% by mass or less, more preferably 70% by mass or less, and even more preferably 65% by mass or less from the viewpoint of providing high-quality printed materials having both good dot spreading properties and excellent image uniformity.

### [Inkjet printing method]

An inkjet printing method using the treatment solution of the present invention is preferably a method including forming an image by inkjet printing with inkjet printing ink on a treated surface of a surface-treated printing medium that has been treated with the treatment solution, and more preferably a method including the following processes 1 and 2:
process 1 of applying the treatment solution to a printing medium and then heat-drying the treatment solution on the printing medium to prepare a surface-treated printing medium; and
process 2 of forming an image on the treated surface of the surface-treated printing medium prepared in the process 1 by inkjet printing with ink containing a colorant and water.

### (Process 1)

The process 1 includes applying the treatment solution to a printing medium and then heat-drying the treatment solution on the printing medium to prepare a surface-treated printing medium.

In the present invention, the printing medium used in the process 1 may be either a low-permeable printing medium or a high-permeable printing medium, and is preferably a low-permeable printing medium from the viewpoint of good dot spreading properties and excellent image uniformity.

The low-permeable printing medium may be, e.g., low-water absorbent coated paper or a non-water absorbent resin film. Examples of the coated paper include general-purpose glossy paper and multicolor form glossy paper. The resin film is preferably at least one selected from the group consisting of a polyester film, a polyvinyl chloride film, a polypropylene film, and a polyethylene film. These resin films may be subjected to a surface treatment, e.g., a corona treatment.

The high-permeable printing medium may be, e.g., high-water absorbent plain paper.

The method for applying the treatment solution to a printing medium is not particularly limited and may include, e.g., immersion, roller coating, spray coating, brush coating, or inkjet coating.

Among these, roller coating is preferred because it enables simple and uniform application of the treatment solution.

The roller coating method may be either of the following (i) or (ii): (i) a method that includes holding the treatment solution in a gap between a printing medium and a member in contact with the printing medium, and moving one of the printing medium and the member relative to the other so that the treatment solution applied to a portion of the printing medium can spread throughout the entire printing medium, thereby forming a surface-treated printing medium treated with the treatment solution; or (ii) a method that includes placing a printing medium and a member in contact with each other or in close proximity with a minute gap between them, and rotating the printing medium and the member so that the treatment solution can be transferred onto the printing medium or the treatment solution held in the minute gap can be absorbed into the printing medium.

Specific examples of rollers used for roller coating include an offset gravure coater, a gravure coater, a doctor coater, a bar coater, a blade coater, a flexo coater, and a roll coater. Among these, one or more selected from the group consisting of a doctor coater, a bar coater, and a roll coater are preferably used.

To perform the processes 1 and 2 continuously, an apparatus for applying the treatment solution to the printing medium is preferably designed to combine a coating means for the treatment solution in the process 1, a heat-drying means in the process 1, and a coating means for the inkjet printing ink in the process 2. In this case, e.g., an inkjet printing apparatus as will be described later may incorporate the coating means for the treatment solution, such as a roller coating machine.

The amount of the treatment solution applied to the printing medium is preferably 0.2 g/m² or more, more preferably 0.5 g/m² or more, even more preferably 1 g/m² or more, and still more preferably 1.3 g/m² or more from the viewpoint of providing high-quality printed materials having both good dot spreading properties and excellent image uniformity. From the same viewpoint, the amount of the treatment solution applied to the printing medium is preferably 5 g/m² or less, more preferably 2 g/m² or less, and even more preferably 1.8 g/m² or less.

In the process 1, after the treatment solution is applied to the printing medium, the treatment solution on the printing medium may be dried at room temperature before heat drying from the viewpoint of providing high-quality printed materials having both good dot spreading properties and excellent image uniformity.

The room temperature drying in the process 1 may be, e.g., static drying, air blow drying, or vacuum drying. The printing method of the present invention does not include drying by active energy rays, e.g., ultraviolet rays or radiation.

The room temperature drying in the process 1 is performed preferably at 45°C or less, more preferably at 40°C or less, even more preferably at 38°C or less, and still more preferably at 30°C or less from the viewpoint of preventing deformation of the printing medium. Furthermore, the room temperature drying is also performed preferably at 20°C or more, and more preferably at 25°C or more from the viewpoint of drying in a short time.

The room temperature drying in the process 1 is performed preferably for 0.5 minutes or more, more preferably for 1 minute or more, and even more preferably for 5 minutes or more, and is also performed preferably for 30 minutes or less, more preferably for 20 minutes or less, and even more preferably for 10 minutes or less.

The heat-drying temperature in the process 1 is preferably 50°C or more, more preferably 70°C or more, and even more preferably 90°C or more from the viewpoint of drying in a short time. Furthermore, the heat-drying temperature is also preferably 125°C or less, more preferably 123°C or less, and even more preferably 120°C or less from the viewpoint of preventing deformation of the printing medium. The heat-drying temperature in the process 1 is preferably a value obtained by measuring the temperature of the treated surface of the surface-treated printing medium with a noncontact thermometer. Alternatively, the heat-drying temperature may be a value obtained by measuring the temperature of the heat-drying means.

The heat-drying time in the process 1 is preferably 10 seconds or more, more preferably 20 seconds or more, and even more preferably 30 seconds or more. Furthermore, the heat-drying time is also preferably 180 seconds or less, more preferably 120 seconds or less, and even more preferably 100 seconds or less from the viewpoint of preventing deformation of the printing medium and improving the printing speed.

A suitable means for heat-drying the surface-treated printing medium may be, e.g., blowing a gas adjusted to the above temperature onto the surface-treated printing medium, holding the surface-treated printing medium in a gas atmosphere adjusted to the above temperature or passing it therethrough, irradiating the treated surface of the surface-treated printing medium with an infrared heater, or heating the surface-treated printing medium using a platen heater.

### (Process 2)

The process 2 includes forming an image on the treated surface of the surface-treated printing medium prepared in the process 1 by inkjet printing with inkjet printing ink.

The inkjet printing ink is loaded into a known inkjet printing apparatus and deposited as ink dots on the treated surface of the surface-treated printing medium prepared in the process 1, thus forming an image. The inkjet printing apparatus may be of any type, e.g., a thermal type or a piezoelectric type.

The present invention may also include the following aspects.
<1> A treatment solution for inkjet printing, containing a polyoxyethylene ether compound (A) having an aromatic ring, a flocculant (B'), and water,
   wherein a content of the compound (A) is 3% by mass or more.
<2> The treatment solution according to <1>, wherein the flocculant (B') is one or more compounds (B) selected from the group consisting of a polyvalent metal salt, a polyamine, and an organic acid.
<3> The treatment solution according to <1> or <2>, wherein the treatment solution is a pretreatment solution for inkjet printing.
<4> The treatment solution according to <2> or <3>, wherein a polyvalent metal ion constituting the polyvalent metal salt is one or more selected from the group consisting of a divalent metal ion and a trivalent metal ion.
<5> The treatment solution according to any one of <2> to <4>, wherein the polyamine is a polymer that contains a constitutional unit derived from a polymerizable monomer having at least one amino group.
<6> The treatment solution according to any one of <2> to <5>, wherein the organic acid is a hydroxycarboxylic acid.
<7> The treatment solution according to any one of <2> to <6>, wherein a mass ratio [compound (B)/compound (A)] of a content of the compound (B) to the content of the compound (A) in the treatment solution is less than 15.
<8> The treatment solution according to any one of <2> to <7>, wherein the compound (B) is one or more selected from the group consisting of magnesium nitrate, calcium nitrate, and aluminum nitrate.
<9> The treatment solution according to any one of <1> to <8>, wherein an HLB value of the compound (A) determined by Griffin's method is 10 or more and 20 or less.
<10> The treatment solution according to any one of <1> to <9>, wherein the HLB value of the compound (A) determined by Griffin's method is 11 or more and 14 or less.
<11> The treatment solution according to any one of <1> to <10>, wherein the content of the compound (A) in the treatment solution is 3% by mass or more and 60% by mass or less.
<12> The treatment solution according to any one of <2> to <11>, wherein the content of the compound (B) in the treatment solution is 1% by mass or more and 40% by mass or less.
<13> The treatment solution according to any one of <2> to <12>, wherein the content of the compound (B) in the treatment solution is 1% by mass or more and 40% by mass or less.
<14> A pretreatment solution for inkjet printing according to any one of <1> to <13>, further containing a pH adjuster in an amount of 0.1% by mass or more and 1% by mass or less with respect to the treatment solution.
<15> A treatment solution for inkjet printing, containing a polyoxyethylene ether compound (A) having an aromatic ring, a flocculant (B'), and water,
   wherein the compound (A) is polyoxyethylene phenyl ethers,
   the flocculant (B') is one or more compounds (B) selected from the group consisting of a polyvalent metal salt, a polyamine, and an organic acid,
   the polyvalent metal salt is an inorganic acid salt of divalent or trivalent metal,
   the polyamine is a polymer that contains a constitutional unit derived from a polymerizable monomer having at least one amino group,
   the organic acid is a hydroxycarboxylic acid,
   a content of the compound (A) is 3% by mass or more,
   a content of the compound (B) is 1% by mass or more and 40% by mass or less, and
   a mass ratio [compound (B)/compound (A)] of the content of the compound (B) to the content of the compound (A) is less than 15.
<16> The treatment solution according to <15>, wherein the compound (A) is polyoxyethylene phenyl ethers with an HLB value of 10 or more and 20 or less,
   the flocculant (B') is one or more compounds (B) selected from the group consisting of a polyvalent metal salt, a polyamine, and an organic acid,
   the polyvalent metal salt is a nitrate of divalent or trivalent metal,
   the polyamine is a diallyl quaternary ammonium salt polymer with a weight average molecular weight of 5000 or more and 50000 or less,
   the organic acid is a hydroxypolycarboxylic acid,
   the content of the compound (A) is 3% by mass or more and 60% by mass or less,
   the content of the compound (B) is 5% by mass or more and 25% by mass or less, and
   the mass ratio [compound (B)/compound (A)] is 0.1 or more and 8 or less.
<17> The treatment solution according to <15> or <16>, wherein the compound (A) is one or more selected from the group consisting of polyoxyethylene phenyl ether and polyoxyethylene distyrenated phenyl ether with an HLB value of 10 or more and 20 or less,
   the flocculant (B') is one or more compounds (B) selected from the group consisting of a polyvalent metal salt, a polyamine, and an organic acid,
   the polyvalent metal salt is one or more selected from the group consisting of magnesium nitrate, calcium nitrate, and aluminum nitrate,
   the polyamine is one or more selected from the group consisting of polydiallyldimethylammonium chloride and a dimethylamine/epichlorohydrin copolymer with a weight average molecular weight of 5000 or more and 50000 or less,
   the organic acid is one or more selected from the group consisting of a citric acid, a tartaric acid, and a lactic acid,
   the content of the compound (A) is 5% by mass or more and 50% by mass or less,
   the content of the compound (B) is 10% by mass or more and 20% by mass or less, and
   the mass ratio [compound (B)/compound (A)] is 0.3 or more and 4 or less.
<18> The treatment solution according to any one of <15> to <17>, wherein the treatment solution is a pretreatment solution for inkjet printing.
<19> The treatment solution according to any one of <15> to <18>, wherein the compound (A) is one or more selected from the group consisting of polyoxyethylene phenyl ether and polyoxyethylene distyrenated phenyl ether with an HLB value of 11 or more and 15 or less.
<20> The treatment solution according to any one of <15> to <19>, wherein the flocculant (B') is a polyvalent metal salt, and the polyvalent metal salt is one or more selected from the group consisting of magnesium nitrate and calcium nitrate.
<21> The treatment solution according to any one of <15> to <20>, wherein the content of the compound (A) is 15% by mass or more and 45% by mass or less.
<22> The treatment solution according to any one of <15> to <21>, wherein the mass ratio [compound (B)/compound (A)] is 0.3 or more and 1 or less.
<23> The treatment solution according to any one of <1> to <122> for use in a treatment of a printing medium for inkjet printing.
<24> An ink set for inkjet printing, including the treatment solution according to any one of <1> to <23> and ink containing a colorant and water.
<25> The ink set according to <24>, wherein the ink is water-based pigment ink.
<26> A surface-treated printing medium, having been treated with the treatment solution according to any one of <1> to <23>.
<27> An inkjet printing method using the treatment solution according to any one of <1> to <23>, including:
   a process 1 of applying the treatment solution to a printing medium and then heat-drying the treatment solution on the printing medium to prepare a surface-treated printing medium; and
   a process 2 of forming an image on the treated surface of the surface-treated printing medium prepared in the process 1 by inkjet printing with ink containing a colorant and water.
<28> Use of a composition as a pretreatment solution for inkjet printing, the composition containing: a polyoxyethylene ether compound (A) having an aromatic ring; one or more compounds (B) selected from the group consisting of a polyvalent metal salt, a polyamine, and an organic acid; and water,
   wherein a content of the compound (A) is 3% by mass or more.
<29> The use of the composition according to <28>, wherein the compound (B) is one or more selected from the group consisting of magnesium nitrate, calcium nitrate, and aluminum nitrate,
   a mass ratio [compound (B)/compound (A)] of a content of the compound (B) to the content of the compound (A) in the composition is 0.3 or more and less than 15,
   an HLB value of the compound (A) determined by Griffin's method is 10 or more and 14 or less,
   the content of the compound (A) in the composition is 5% by mass or more and 60% by mass or less,
   the content of the compound (B) in the composition is 1% by mass or more and 40% by mass or less, and
   the composition further contains triethanolamine in an amount of 0.1% by mass or more and 1% by mass or less.
<30> The use of the composition according to <28> or <29>, wherein the composition is used with water-based pigment ink.

### Examples

In the following Production Examples, Examples, and Comparative Examples, "parts" represents "parts by mass" unless otherwise specified.

Various physical properties were measured or calculated by the following methods.

### (1) Number average molecular weight of pigment dispersion resin

The number average molecular weight was determined by gel permeation chromatography. A measurement sample was prepared by mixing 0.1 g of resin with 10 mL of the eluent below in a glass vial, stirring the mixture at 25°C for 10 hours with a magnetic stirrer, and filtering it through a syringe filter "DISMIC-13HP" (manufactured by ADVANTEC TOYO KAISHA, LTD., PTFE, 0.2 µm). The measurement conditions are as follows.
GPC device: "HLC-8320GPC" manufactured by Tosoh Corporation
Column: "TSKgel Super AWM-H," "TSKgel Super AW3000," and "TSKgel guardcolum Super AW-H" manufactured by Tosoh Corporation
Eluent: a solution prepared by dissolving phosphoric acid and lithium bromide in N,N-dimethylformamide at concentrations of 60 mmol/L and 50 mmol/L, respectively
Flow rate: 0.5 mL/min
Standard substance: monodisperse polystyrene kits with known molecular weights "PStQuick b (F-550, F-80, F-10, F-1, a-1000)" and "PStQuick c (F-288, F-40, F-4, A-5000, A-500)" manufactured by Tosoh Corporation

### (2) Acid value of pigment dispersion resin

Using an automatic potentiometric titrator (manufactured by Kyoto Electronics Manufacturing Co., Ltd., piston burette APB-610), a resin was dissolved in a titration solvent containing toluene and acetone (toluene : acetone = 2 : 1 by volume) and titrated with a 0.1 N potassium hydroxide/ethanol solution by potentiometric titration, where the inflection point on the titration curve was taken as the end point. The acid value (mg KOH/g) was calculated from the titration volume of the potassium hydroxide solution to the end point.

### (3) Solid content concentration of pigment dispersion and wax dispersion

A 30 mL polypropylene container (φ: 40 mm, height: 30 mm) was accurately weighed. About 10.0 g of sodium sulfate (reagent, manufactured by FUJIFILM Wako Pure Chemical Corporation), which had been dried to a constant weight in a desiccator, was weighed into the container, and the mass of the sodium sulfate was accurately weighed. Moreover, about 1 g of pigment dispersion or wax dispersion was added and mixed with the sodium sulfate, and then the mass of the pigment dispersion or wax dispersion was accurately weighed. Next, the mixture was maintained at 105°C for 2 hours to remove volatile components, and left in a desiccator for another 15 minutes. Subsequently, the total mass of the container was accurately weighed. The mass of the residual pigment dispersion or wax dispersion after removal of the volatile components was calculated by subtracting the accurately weighed mass of the container and the accurately weighed mass of the sodium sulfate from the accurately weighed total mass of the container. A solid content concentration (% by mass) was determined by dividing the mass of the residual pigment dispersion or wax dispersion after removal of the volatile components by the accurately weighed mass the pigment dispersion or wax dispersion before removal of the volatile components.

### (4) Melting point of wax

The melting point of wax was measured with a device in accordance with JIS K 0064:1992. Specifically, a wax dispersion was dried and hardened as a sample. Using a differential scanning calorimeter "DSC Q20" (manufactured by TA Instruments), the sample was heated to 200°C, and then cooled from that temperature to 0°C at a rate of 10°C/min. Next, the sample was heated at a rate of 10° C./min, and the heat quantity was measured up to 200°C. Of the observed melting heat peaks, the temperature of the peak with the largest peak area was defined as the maximum melting peak temperature, and this peak temperature was taken as the melting point of the wax.

### (5) Average particle size of pigment dispersion

Using a laser particle analysis system "ELS-8000" (manufactured by Otsuka Electronics Co., Ltd.), the particle size was measured by dynamic light scattering and calculated by cumulant analysis.

The measurement conditions were as follows: the temperature was 25°C; the angle between the incident light and the detector was 90°; and the cumulative number was 100. The refractive index (1.333) of water was input as the refractive index of a dispersion medium. A measurement sample was prepared by weighing a pigment dispersion into a screw tube (manufactured by Maruemu Corporation, No. 5), adding water to the pigment dispersion so that the solid content concentration was 2 × 10⁻⁴% by mass, and stirring the mixture at 25°C for 1 hour with a magnetic stirrer.

### (6) Viscosity of treatment solution

The viscosity of the treatment solution at 25°C was measured using an E-type viscometer (manufactured by Toki Sangyo Co., Ltd., model No.: TV-25, standard cone rotor: 1°34' × R24, rotation speed: 50 rpm).

### (7) pH of treatment solution

The pH of the treatment solution at 20°C was measured using a desktop pH meter "F-71" (manufactured by HORIBA, Ltd.) equipped with a pH electrode "6337-10D" (manufactured by HORIBA, Ltd.).

### Production Example 1-1 (production of pigment dispersion resin (1))

A monomer mixture was prepared by mixing 31 parts of acrylic acid (reagent, manufactured by FUJIFILM Wako Pure Chemical Corporation) and 69 parts of styrene (reagent, manufactured by FUJIFILM Wako Pure Chemical Corporation).

Then, 10 parts of methyl ethyl ketone (also referred to as "MEK" below) (reagent, manufactured by FUJIFILM Wako Pure Chemical Corporation), 0.2 parts of a polymerization chain transfer agent (2-mercaptoethanol) (reagent, manufactured by FUJIFILM Wako Pure Chemical Corporation), and 10% by mass of the monomer mixture were placed in a reaction vessel and mixed. The reaction vessel was thoroughly purged with nitrogen gas.

Meanwhile, a liquid mixture of the remainder of the monomer mixture (90% by mass of the monomer solution), 0.13 parts of the polymerization chain transfer agent, 30 parts of MEK, and 1.1 parts of a radical polymerization initiator (2,2'-azobis(2,4-dimethylvaleronitrile), trade name "V-65" manufactured by FUJIFILM Wako Pure Chemical Corporation) was placed in a dropping funnel. Under a nitrogen atmosphere, the monomer mixture in the reaction vessel was heated to 65°C while stirring, and the liquid mixture in the dropping funnel was added dropwise over 3 hours. After the resulting mixed solution had been held at 65°C for 2 hours from the completion of the dropping, a solution composed of 0.1 parts of the polymerization initiator dissolved in 2 parts of MEK was added to the mixed solution, which was further aged at 65°C for 2 hours and at 70°C for 2 hours. This mixed solution was then dried under reduced pressure, thereby providing an acrylic acid/styrene copolymer (number-average molecular weight: 19,000, acid value: 240 mgKOH/g) as a pigment dispersion resin (1) (also referred to as a "pigment dispersion resin (1)" below).

### Production Example 2-C1 (production of cyan ink I-C1 for inkjet printing)

First, 100 parts of the pigment dispersion resin (1) obtained in Production Example 1-1 were mixed with 78.6 parts of MEK. Further, 41.2 parts of a 5N sodium hydroxide aqueous solution (manufactured by FUJIFILM Wako Pure Chemical Corporation, for use in volumetric analysis, sodium hydroxide content: 16.9% by mass) were added as a neutralizing agent to neutralize the mixture (degree of neutralization: 40 mol%). Next, 800 parts of ion exchanged water were added to the mixture, followed by 100 parts of cyan pigment (C.I. Pigment Blue 15:3, trade name "TGR-SD" manufactured by DIC Corporation). This mixed solution was stirred at 20°C for 60 minutes with a disperser (trade name "ULTRA DESPA" manufactured by ASADA IRON WORKS, CO., LTD.) using the disperser blade at a rotation speed of 7,000 rpm, and thus a pigment mixture was obtained.

Subsequently, the pigment mixture was dispersed at 200 MPa for 10 passes with Microfluidizer (trade name, manufactured by Microfluidics) to prepare a cyan pigment dispersion solution.

The cyan pigment dispersion solution was mixed with 250 parts of ion exchanged water and stirred. Then, MEK was fully removed under reduced pressure at 60°C, and a portion of the water was further removed. As a crosslinking agent, 35.7 parts of trimethylolpropane polyglycidyl ether (trade name "DENACOL EX-321" manufactured by Nagase ChemteX Corporation, epoxy equivalent: 140) was added to the cyan pigment dispersion solution. The mixture was sealed airtight and heated at 70°C for 5 hours while stirring with a stirrer, and then cooled to room temperature. Moreover, ion exchanged water was added to the mixture so that the solid content concentration was 24% by mass. This mixed solution was filtered through a filter with a 5 µm pore size (manufactured by FUJIFILM Wako Pure Chemical Corporation, acetylcellulose membrane, outer diameter: 2.5 cm), and thus a cyan pigment dispersion (crosslinking rate: 60 mol%, average particle size: 102 nm) was obtained.

Next, 50 parts of the cyan pigment dispersion was mixed with 2.9 parts of a polyethylene wax dispersion (trade name "HYTEC E-6500" manufactured by TOHO CHEMICAL INDUSTRY CO., LTD., ion type: nonionic, wax melting point: 140°C, solid content concentration: 35% by mass), 19 parts of 1,2-propanediol (reagent, manufactured by FUJIFILM Wako Pure Chemical Corporation), 8 parts of ethylene glycol monobutyl ether (reagent, manufactured by FUJIFILM Wako Pure Chemical Corporation), and 0.5 parts of 2,4,7,9-tetramethyl-5-decyne-4,7-diol (trade name "SURFYNOL 104" manufactured by Air Products & Chemicals) as an acetylene glycol surfactant. Then, ion exchanged water was added to the mixture until the total volume reached 100 parts. This mixed solution was filtered through a filter with a 5 µm pore size (manufactured by FUJIFILM Wako Pure Chemical Corporation, acetylcellulose membrane, outer diameter: 2.5 cm), resulting in cyan ink I-C1 for inkjet printing (solid content concentration: 13% by mass, pigment content: 5% by mass, pigment dispersion resin content: 7% by mass, wax content: 1% by mass).

### Production Example 2-C2 (production of cyan ink I-C2 for inkjet printing)

Cyan ink I-C2 for inkjet printing was produced in the same manner as Production Example 2-C1, except that the water-soluble organic solvent was changed from 1,2-propanediol and ethylene glycol monobutyl ether to 19 parts of dipropylene glycol (reagent, manufactured by Tokyo Chemical Industry Co., Ltd.) and 8 parts of 1,2-hexanediol (reagent, manufactured by Tokyo Chemical Industry Co., Ltd.).

### Production Example 2-M1 (production of magenta ink I-M1 for inkjet printing)

Magenta ink I-M1 for inkjet printing was produced in the same manner as Production Example 2-C1, except that the cyan pigment was replaced with a magenta pigment (C.I. Pigment Red 122, trade name "FASTOGEN Super Magenta RGT" manufactured by DIC Corporation).

### Production Example 2-M2 (production of magenta ink I-M2 for inkjet printing)

Magenta ink I-M2 for inkjet printing was produced in the same manner as Production Example 2-C2, except that the cyan pigment was replaced with a magenta pigment (C.I. Pigment Red 122, trade name "FASTOGEN Super Magenta RGT" manufactured by DIC Corporation).

### Preparation Example 1 (preparation of treatment solution 1)

Components of a treatment solution were added according to the composition described below to a container equipped with a stirrer. These compositions were mixed at 25°C for 1 hour, and the mixture was then filtered using a 25 mL needleless syringe (manufactured by Terumo Corporation) having a filter with a 5 µm pore size (manufactured by FUJIFILM Wako Pure Chemical Corporation, acetylcellulose membrane, outer diameter: 2.5 cm). Thus, a treatment solution 1 was prepared. The treatment solution 1 had a viscosity of 5.6 mPa·s at 25°C and a pH of 5.1 at 20°C.

### [Composition of treatment solution 1]

Polyoxyethylene phenyl ether (number of moles of EO added: 5, HLB value: 14) (trade name "BLAUNON PH-5" manufactured by AOKI OIL INDUSTRIAL CO., LTD.) 20.0 parts
Magnesium nitrate hexahydrate (reagent, manufactured by Tokyo Chemical Industry Co., Ltd.) 25.9 parts
Ion exchanged water 53.6 parts
Triethanolamine (manufactured by NIPPON SHOKUBAI CO., LTD.) 0.5 parts

### Preparation Examples 2 to 12 and Comparative Preparation Examples 1 to 3 (preparation of treatment solutions 2 to 12 and C1 to C3)

Treatment solutions 2 to 12 and C1 to C3 were prepared in the same manner as Preparation Example 1, except that the composition of each treatment solution was changed according to Table 1.

Components of the treatment solutions other than those used in Preparation Example 1 are as follows.

### [Polyoxyethylene ether compound (A) having aromatic ring]

- Polyoxyethylene distyrenated phenyl ether (trade name "EMULGEN A-60" manufactured by Kao Corporation, HLB value: 12.6, effective content 100%)
- Polyoxyethylene styrenated phenyl ether (number of moles of EO added: 9, HLB value: 11.4) (trade name "BLAUNON DSP-9" manufactured by AOKI OIL INDUSTRIAL CO., LTD., effective content 100%)
- Diethylene glycol monobenzyl ether (trade name "Benzyl Di Glycol" manufactured by NIPPON NYUKAZAI CO., LTD., HLB value: 10.7, effective content 100%)
- Polyoxyethylene distyrenated phenyl ether (trade name "EMULGEN A-500" manufactured by Kao Corporation, HLB value: 18, effective content 100%)

### [Compound (A') other than polyoxyethylene ether compound (A) having aromatic ring]

- 1,4-Cyclohexanedimethanol (manufactured by Eastman Chemical)
- Polyoxyethylene alkyl ether (trade name "EMULGEN 1108" manufactured by Kao Corporation, HLB value: 13.5, effective content 100%)

### [Compound (B)]

### [Polyvalent metal salt]

- Calcium nitrate tetrahydrate (reagent, manufactured by Tokyo Chemical Industry Co., Ltd.)
- Aluminum nitrate nonahydrate (reagent, manufactured by Tokyo Chemical Industry Co., Ltd.)

### [Polyamine]

- PAS-H-1L (aqueous solution of polydiallyldimethylammonium chloride (solid content 28% by mass), trade name, manufactured by NITTOBO MEDICAL CO., LTD., weight average molecular weight: 8,500 (catalog value))
- UNISENCE KHE-107L (aqueous solution of dimethylamine/epichlorohydrin copolymer (solid content 52% by mass), trade name, manufactured by SENKA Corporation, PEG-equivalent molecular weight by GPC: less than 20,000 (catalog value))

### [Organic acid]

- 40% by mass ammonium lactate aqueous solution (aqueous solution with effective content of 40% by mass, manufactured by FUJIFILM Wako Pure Chemical Corporation)

### (Example 1)

### (Process 1)

Using a wireless bar coater "A-Bar" (manufactured by MITSUI ELECTRIC CO., LTD., model: OSP-1.5, pitch: 0.08 mm, depth: 4 µm, film thickness: 1.5 µm/wet), the treatment solution 1 was uniformly applied to coated paper as a low-permeable printing medium ("OK Topkote Plus" manufactured by Oji Paper Co., Ltd., basis weight: 127.9 g/m², pure water absorption during 100 ms of contact: 4.9 g/m²). Then, the coated paper was allowed to stand at 25°C and 50% RH for 10 minutes, so that it was dried at room temperature. Thereafter, the coated paper was heat-dried for 60 seconds in a constant temperature bath kept at 100°C. The amount of the treatment solution 1 applied was 1.6 ± 0.3 g/m².

### (Process 2)

An image was formed on the treated surface of the surface-treated printing medium prepared in the process 1 by inkjet printing with the cyan ink I-C1 and the magenta ink I-M1 using the methods as described in the following (1) and (2). The resulting printed materials were evaluated. Table 1 shows the results.

### Examples 2 to 12 and Comparative Examples 1 to 3

Surface-treated printing media were prepared in the same manner as the process 1 of Example 1, except that each of the treatment solutions shown in Table 1 was used instead of the treatment solution 1.

As in the case of the process 2 of Example 1, an image was formed on the treated surface of the surface-treated printing medium prepared in the process 1 by inkjet printing with the cyan ink I-C1 and the magenta ink I-M1 using the methods as described in the following (1) and (2). The resulting printed materials were evaluated. Table 1 shows the results.

### Example 13

An image was formed by inkjet printing in the same manner as the process 2 of Example 1, except that the cyan ink I-C1 and the magenta ink I-M1 were replaced with the cyan ink I-C2 and the magenta ink I-M2, respectively. The resulting printed materials were evaluated. Table 1 shows the results.

### <Evaluation>

### (1) Evaluation of dot spreading properties

According to the following inkjet printing process, images were formed on the surface-treated printing media prepared in the process 1 of Examples and Comparative Examples with cyan ink for inkjet printing, and then evaluated. Similarly, using printing media which were dried at room temperature, but not subjected to the subsequent heat drying in the process 1 of Examples and Comparative Examples, images were formed on the printing media with cyan ink for inkjet printing, and then evaluated.

### (Printing by inkjet printing process)

In an environment with a temperature of 25 ± 1°C and a relative humidity of 30 ± 5%, cyan ink for inkjet printing was filled into a printing evaluation device (manufactured by Tritek Co., Ltd.) equipped with an inkjet head "KJ4B-HD06MHG-STDV" (piezoelectric type, manufactured by KYOCERA Corporation).

The print conditions were set as follows: head voltage 26 V, frequency 20 kHz, optimal ejection volume 12 pL, head temperature 32°C, resolution 600 dpi, and negative pressure - 4.0 kPa. The surface-treated printing medium or the printing medium after room temperature drying in the process 1 was fixed to the transport table under reduced pressure with their longitudinal direction aligned parallel to the transportation direction. A print command was transferred to the printing evaluation device to print an image with a cyan ink duty of 2%. Using a hand-held image evaluation system "PIAS (registered trademark)-II" (manufactured by Quality Engineering Associates (QEA) Inc.), a dot diameter of the ink was measured with a threshold of 50%, a minimum dot diameter of 10 µm, and a maximum dot diameter of 100 µm. Table 1 shows the results. The larger the dot diameter, the better the dot spreading properties and the higher the image quality. The evaluation criteria are shown below. The C rating indicates that there are no practical issues.

### (Evaluation Criteria)

A: dot diameter of 60 µm or more
B: dot diameter of 58 µm or more and less than 60 µm
C: dot diameter of 55 µm or more and less than 58 µm
D: dot diameter less than 55 µm

### (2) Evaluation of image uniformity

According to the following inkjet printing process, images were formed on the surface-treated printing media prepared in the process 1 of Examples and Comparative Examples with cyan ink for inkjet printing and magenta ink for inkjet printing.

### (Printing by inkjet printing process)

In an environment with a temperature of 25 ± 1°C and a relative humidity of 30 ± 5%, cyan ink for inkjet printing and magenta ink for inkjet printing were filled into a printing evaluation device (manufactured by Tritek Co., Ltd.) equipped with an inkjet head "KJ4B-HD06MHG-STDV" (piezoelectric type, manufactured by KYOCERA Corporation).

The print conditions were set as follows: head voltage 26 V, frequency 20 kHz, optimal ejection volume 12 pL, head temperature 32°C, resolution 600 dpi, and negative pressure - 4.0 kPa. The surface-treated printing medium was fixed to the transport table under reduced pressure with its longitudinal direction aligned parallel to the transportation direction. A print command was transferred to the printing evaluation device to print an image with a cyan ink duty of 60% and a magenta ink duty of 60%, i.e., an image with a total duty of 120%. Using a hand-held image evaluation system "PIAS (registered trademark)-II" (manufactured by Quality Engineering Associates (QEA) Inc.), the image uniformity of the printed portion was determined by measuring the L* Graininess value. Table 1 shows the results. The lower the L* Graininess value, the less likely dots are to bleed into each other, thus improving the image quality. The evaluation criteria are shown below. The C rating indicates that there are no practical issues.

### (Evaluation Criteria)

A: L* Graininess value of less than 1.6
B: L* Graininess value of 1.6 or more and less than 2.3
C: L* Graininess value of 2.3 or more and less than 3.0
D: L* Graininess value of 3.0 or more

**[TABLE 1]**

| | | | | Example | | | | | | | | | | | | | Comparative Example | | |
|---|---|---|---|---|---|---|---|---|---|---|---|---|---|---|---|---|---|---|---|
| | | | | 1 | 2 | 3 | 4 | 5 | 6 | 7 | 8 | 9 | 10 | 11 | 12 | 13 | 1 | 2 | 3 |
| Type of treatment solution | | | | 1 | 2 | 3 | 4 | 5 | 6 | 7 | 8 | 9 | 10 | 11 | 12 | 1 | C1 | C2 | C3 |
| Composition of treatment solution (part) | Compound (A) | Polyoxyethylene phenyl ether (HLB value: 14) | | 20.0 | 20.0 | 20.0 | 20.0 | 20.0 | 20.0 | 40.0 | 5.0 | | | | | 20.0 | 1.0 | | |
| | | Polyoxyethylene distyrenated phenyl ether (HLB value: 12.6) | | | | | | | | | | 20.0 | | | | | | | |
| | | Polyoxyethylene styrenated phenyl ether (HLB value: 11.4) | | | | | | | | | | | 20.0 | | | | | | |
| | | Diethylene glycol monobenzyl ether (HLB value: 10.7) | | | | | | | | | | | | 20.0 | | | | | |
| | | Polyoxyethylene distyrenated phenyl ether (HLB value: 18) | | | | | | | | | | | | | 20.0 | | | | |
| | Compound (A') | 1,4-Cyclohexanedimethanol | | | | | | | | | | | | | | | | 20.0 | |
| | | Polyoxyethylene alkyl ether (HLB value: 13.5) | | | | | | | | | | | | | | | | | 20.0 |
| | Compound (B)*1 | Polyvalent metal salt | Mg(NO₃)₂·6H₂O | 25.9 | | | | | | 25.9 | 25.9 | 25.9 | 25.9 | 25.9 | 25.9 | 25.9 | 25.9 | 25.9 | 25.9 |
| | | | Ca(NO₃)₂·4H₂O | | 21.6 | | | | | | | | | | | | | | |
| | | | Al(NO₃)₃·9H₂O | | | 26.4 | | | | | | | | | | | | | |
| | | Polyamine | PAS-H-1L (polydiallyldimethylammonium chloride) | | | | 53.6 | | | | | | | | | | | | |
| | | | UNISENCE KHE-107L (dimethylamine/epichlorohydrin copolymer) | | | | | 28.8 | | | | | | | | | | | |
| | | Organic acid | NH₄(C₂H₄(OH)COO) (40 mass%aq) | | | | | | 37.5 | | | | | | | | | | |
| | Water | | Ion exchanged water | 53.6 | 57.9 | 53.1 | 25.9 | 50.7 | 42.5 | 33.6 | 68.6 | 53.6 | 53.6 | 53.6 | 53.6 | 53.6 | 72.6 | 53.6 | 53.6 |
| | pH adjuster | | Triethanolamine | 0.5 | 0.5 | 0.5 | 0.5 | 0.5 | | 0.5 | 0.5 | 0.5 | 0.5 | 0.5 | 0.5 | 0.5 | 0.5 | 0.5 | 0.5 |
| Content of component in treatment solution (% by mass) | Compound (A) or Compound (A') | | | 20.0 | 20.0 | 20.0 | 20.0 | 20.0 | 20.0 | 40.0 | 5.0 | 20.0 | 20.0 | 20.0 | 20.0 | 20.0 | 1.0 | 20.0 | 20.0 |
| | Compound (B) | | Polyvalent metal salt | 15.0 | 15.0 | 15.0 | | | | 15.0 | 15.0 | 15.0 | 15.0 | 15.0 | 15.0 | 15.0 | 15.0 | 15.0 | 15.0 |
| | | | Polyamine | | | | 15.0 | 15.0 | | | | | | | | | | | |
| | | | Organic acid | | | | | | 15.0 | | | | | | | | | | |
| | pH adjuster | | Triethanolamine | 0.5 | 0.5 | 0.5 | 0.5 | 0.5 | | 0.5 | 0.5 | 0.5 | 0.5 | 0.5 | 0.5 | 0.5 | 0.5 | 0.5 | 0.5 |
| | Water | | | 64.5 | 64.5 | 64.5 | 64.5 | 64.5 | 65.0 | 44.5 | 79.5 | 64.5 | 64.5 | 64.5 | 64.5 | 64.5 | 83.5 | 64.5 | 64.5 |
| Type of cyan ink for inkjet printing | | | | I-C1 | I-C1 | I-C1 | I-C1 | I-C1 | I-C1 | I-C1 | I-C1 | I-C1 | I-C1 | I-C1 | I-C1 | I-C2 | I-C1 | I-C1 | I-C1 |
| Type of magenta ink for inkjet printing | | | | I-M1 | I-M 1 | I-M 1 | I-M1 | I-M1 | I-M1 | I-M1 | I-M1 | I-M1 | I-M1 | I-M1 | I-M1 | I-M2 | I-M1 | I-M1 | I-M1 |
| Evaluation of dot spreading properties using printing medium after room temperature drying (25°C/10 min) in process 1 | | | | 61 | 60 | 56 | 59 | 57 | 58 | 62 | 56 | 61 | 60 | 60 | 55 | 60 | 52 | 60 | 53 |
| Evaluation of dot spreading properties using surface-treated printing medium obtained by heat drying (100°C/60 min) in process 1 | | | | 61 | 60 | 55 | 59 | 57 | 60 | 62 | 55 | 61 | 60 | 57 | 55 | 60 | 50 | 53 | 53 |
| Evaluation of image uniformity using surface-treated printing medium obtained by heat drying (100°C/60 min) in process 1 | | | | 1.2 | 1.5 | 2.6 | 2.7 | 2.1 | 2.8 | 1.3 | 2.3 | 1.3 | 1.5 | 2.4 | 2.0 | 1.6 | 3.5 | 3.2 | 3.3 |

| | | | | | | | | | | | | | | | | | | | |
|---|---|---|---|---|---|---|---|---|---|---|---|---|---|---|---|---|---|---|---|
| *1: The amount (part) of the compound (B) is on an as-is basis. | | | | | | | | | | | | | | | | | | | |

As can be seen from Table 1, compared to Comparative Examples 1 to 3, Examples 1 to 13 can produce high-quality printed materials having both good dot spreading properties and excellent image uniformity, even when the treatment solution is heat-dried after being applied to the low-permeable printing medium.

### Industrial Applicability

The present invention is capable of providing a treatment solution for inkjet printing, an ink set for inkjet printing, a surface-treated printing medium, and an inkjet printing method, all designed to produce high-quality printed materials having both good dot spreading properties and excellent image uniformity, even if the treatment solution is heat-dried after being applied to a low-permeable printing medium.

## Claims

1. A treatment solution for inkjet printing, comprising a polyoxyethylene ether compound (A) having an aromatic ring, a flocculant (B'), and water,
wherein a content of the compound (A) is 3% by mass or more.

2. The treatment solution according to claim 1, wherein the flocculant (B') is one or more compounds (B) selected from the group consisting of a polyvalent metal salt, a polyamine, and an organic acid.

3. The treatment solution according to claim 2, wherein a polyvalent metal ion constituting the polyvalent metal salt is a divalent metal ion.

4. The treatment solution according to claim 2, wherein the polyamine is a polymer that contains a constitutional unit derived from a polymerizable monomer having at least one amino group.

5. The treatment solution according to claim 2, wherein a mass ratio [compound (B)/compound (A)] of a content of the compound (B) to the content of the compound (A) in the treatment solution is less than 15.

6. The treatment solution according to claim 2, wherein the compound (B) is a polyvalent metal salt.

7. The treatment solution according to claim 2, wherein an HLB value of the compound (A) is 10 or more and 20 or less.

8. The treatment solution according to claim 2, wherein the content of the compound (A) in the treatment solution is 5% by mass or more and 60% by mass or less.

9. The treatment solution according to claim 2, wherein a content of the compound (B) in the treatment solution is 1% by mass or more and 40% by mass or less.

10. The treatment solution according to claim 2, for use in a treatment of a printing medium for inkjet printing.

11. The treatment solution according to claim 2, wherein the treatment solution is a pretreatment solution for inkjet printing.

12. An ink set for inkjet printing, comprising:
the treatment solution according to any one of claims 1 to 11; and
ink containing a colorant and water.

13. A surface-treated printing medium, having been treated with the treatment solution according to any one of claims 1 to 11.

14. An inkjet printing method using the treatment solution according to any one of claims 1 to 11, comprising:
a process 1 of applying the treatment solution to a printing medium and then heat-drying the treatment solution on the printing medium to prepare a surface-treated printing medium; and
a process 2 of forming an image on the treated surface of the surface-treated printing medium prepared in the process 1 by inkjet printing with ink containing a colorant and water.

15. Use of a composition as a pretreatment solution for inkjet printing, the composition comprising: a polyoxyethylene ether compound (A) having an aromatic ring; one or more compounds (B) selected from the group consisting of a polyvalent metal salt, a polyamine, and an organic acid; and water,
wherein a content of the compound (A) is 3% by mass or more.
